# EUROPEAN PATENT APPLICATION

(11) **EP 4 671 082 A1**
(43) Date of publication of application: **31.12.2025**
(21) Application number: 24305999.5
(22) Date of filing: 24.06.2024
(51) Int. Cl.: B61L 15/00, B60R 25/24

(54) **AUTHENTICATION SYSTEM FOR AUTHENTICATING AN AGENT IN A VEHICLE AND AUTHENTICATION METHOD USING SUCH SYSTEM**

(71) Applicant: SpeedInnov, 75008 Paris (FR)
(72) Inventor: PALLAS, Fabrice, 17340 CHATELAILLON (FR); LEONARDI, Hugo, 17000 LA ROCHELLE (FR)
(74) Representative: Plasseraud IP

(57) **Abstract**

The authentication system (5) comprises:
- a hardware interface (13), configured to activate functions and commands to operate the vehicle (1),
- badges (7), for each agent to be equipped with ;
- a badge reader (9), configured to be located in a driver's cab (2) of the vehicle (1) and to read the badges (7) ;
- a database (15) of registered agents (16), each registered agent (16) corresponding to one of the badges (7), and
- a main authentication unit (11) being configured to select an authenticated agent (18) among the registered agents (16), the authenticated agent (18) corresponding to the badge (7) currently read by the badge reader (9).

The hardware interface (13) is configured to selectively activate some of the functions and commands depending on the selected authenticated agent (18) when one of the badges (7) is read by the badge reader (9).

## Description

The present invention concerns an authentication system for authenticating an agent in a vehicle.

The present invention also concerns an authentication method using such authentication system.

In order to ensure the safety of a vehicle, such as a train, by preventing unauthorized people to take control of it, it is known to use an authentication system. Currently, an agent operating a train, for example a driver or a maintenance operator, has to insert a key in a driver desk of the vehicle to activate operating and maintenance functions and commands. If the agent is a driver of the vehicle, he then has to manually enter his personal information for juridical purposes and enter passwords to activate specific additional functions.

With this solution, the procedure is laborious and takes time when a new agent takes control of the vehicle. In addition, the security is not optimal since all agents have access to the same functions and commands after using the key in the driver desk, no matter how qualified they are.

It is therefore an object of the invention to provide an authentication system of an agent on a driver desk of a vehicle that simplifies the activation procedure while providing a higher security level.

To this end, the object of this invention is an authentication system for authenticating an agent in a vehicle, comprising:
- a hardware interface configured to activate functions and commands to operate the vehicle;
- badges, for each agent to be equipped with;
- a badge reader, configured to be located in a driver's cab of the vehicle and to read the badges;
- a database of registered agents, each registered agent corresponding to one of the badges;
- a main authentication unit being configured to select an authenticated agent among the registered agents, the authenticated agent corresponding to the badge currently read by the badge reader;
and the hardware interface is configured to selectively activate some of the functions and commands depending on the selected authenticated agent when one of the badges is read by the badge reader.

Thanks to the invention, the procedure only requires the presentation of a personal badge to the badge reader, which is quick and easy. In addition, the authentication system is able to recognize the profile of the agent and activate the functions and commands accordingly, so that each agent only has access to the functions and commands he is qualified for, which increases the safety of the operations.

According to further aspects of the invention, which are advantageous but not compulsory, the authentication system might incorporate one or several of the following features:
- the authentication system comprises a recording unit, configured to collect and store authenticated agent's data, once the main authentication unit has selected the authenticated agent from the database of registered agents, wherein the authenticated agent's data is extracted from the database of registered agents and is communicated to the recording unit by the main authentication unit;
- the authenticated agent's data include information among at least one of the following: an identification number of the authenticated agent, a profile of the authenticated agent, a housing company of the authenticated agent, a list of operative authorizations for the authenticated agent, a language of the authenticated agent and a nationality of the authenticated agent;
- the authentication system comprises :
   - a password authentication interface, configured to be located in the driver's cab;
   - a commuter, configured to be located in the driver's cab, to bypass the badge reader and the main authentication unit and to activate the password authentication interface; and
   - an auxiliary authentication unit, configured to compare a first password from the password authentication interface with a second password generated by an algorithm stored in the auxiliary authentication unit and to activate some of the commands and functions if the first password and the second password are equal;
- the hardware interface, the recording unit and the auxiliary authentication unit belong to a vehicle control and management system of the vehicle;
- the database of registered agents comprises operative authorizations, each registered agent being attributed with some of the operative authorizations and the hardware interface is configured to activate a given list of functions or commands depending on the operative authorizations attributed to the authenticated agent;
- the functions and commands include at least one function or command among: a management of train modes, an activation of traction of a train, a driving of the train, an access to diagnostic screens and an access to debug screens;
- the database of registered agents belongs to the main authentication unit.

The invention also concerns a vehicle comprising an authentication system according to the invention.

According to further aspects of the invention, which are advantageous but not compulsory, the vehicle comprises the driver's cab and the badge reader is located in the driver's cab.

The invention also concerns an authentication method using an authentication system according to the invention and comprising the following steps:
- reading of one of the badges by the badge reader;
- selection of the authenticated agent among the database of registered agents by the main authentication unit depending on the read by the badge reader;
- selective activation by the hardware unit of some of the functions and commands to operate the vehicle depending on the authenticated agent.

The invention will be better understood on the basis of the following description which is given in correspondence with the annexed figure and as an illustrative example, without restricting the object of the invention. In the annexed figure:

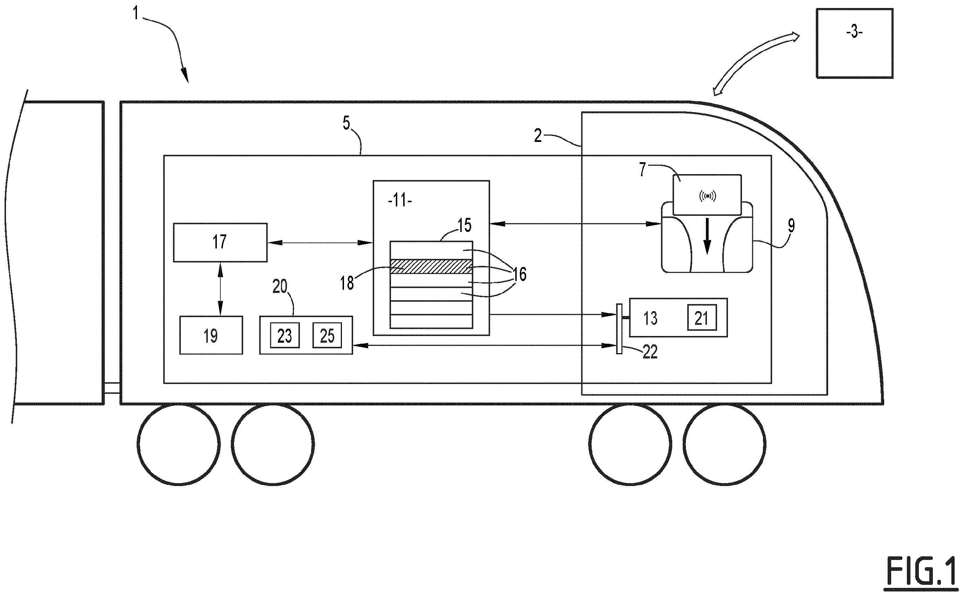

**Fig.** 1 is an exemplary vehicle comprising an authentication system according to the invention.

Figure 1 represents a railway vehicle 1, which is preferably a train. Alternatively, the railway vehicle 1 is a subway of a tramway. Alternatively, the vehicle 1 can be any other type of vehicle, such as a bus, a ferry or a plane.

The railway vehicle 1 is intended to travel on railroad tracks between railway stations. A control room 3, located in one of the railway stations or in another building, is able to communicate with the railway vehicle 1 when at the railway station and when travelling.

The railway vehicle 1 can be operated by a plurality of agents. An agent is for example a driver or a maintenance operator. Each agent has specific qualifications and is able to use some functions and commands of the railway vehicle 1 to operate the railway vehicle 1.

The functions and commands include for example a management of train modes, an activation of traction of the train, a driving of the train, an access to diagnostic screens and an access to debug screens.

The railway vehicle 1 comprises a locomotive and, preferably, railcars. The railway vehicle 1 comprises a driver's cab 2, preferably inside the locomotive or a main railcar, located at the front or at the back of the railway vehicle 1.

The railway vehicle 1 comprises an authentication system 5 used to authenticate one of the agents and selectively activate some of the functions and commands, as described further in the description.

The authentication system 5 comprises badges 7, a badge reader 9, a main authentication unit 11, a hardware interface 13 and a database 15 of registered agents 16.

The badges 7 are preferably personal, which means that each agent has its own badge 7. Alternatively, at least one of the badges 7 can be shared between several agents having the same qualifications.

The badge reader 9 is located in the driver's cab 2 of the railway vehicle 1, preferably on a driver desk. It is able to read each badge 7 when said badge 7 is in the driver's cab 2, preferably when said badge 7 is close to or inside the badge reader 9, for example through near-field communication (NFC). Advantageously, the badge reader comprises a supporting portion which allows one of the badges 7 to be kept close to the badge reader 9.

The main authentication unit 11 is located inside or outside of the railway vehicle 1, for example at one of the railway station or in the control room 3, and is able to communicate with the badge reader 9 and with the hardware interface 13. The main authentication unit 11 preferably communicates with the badge reader following a RS485 protocol and with the hardware unit 13 via cables.

Advantageously, the database 15 comprises as many entries as the number of badges 7, each entry corresponding to one badge 7. In other words, each registered agent 16 in the database 15 corresponds to one badge 7. Each registered agent 16 is associated to a list of features in the database 15. The list of features preferably includes an identification number of the registered agent 16, a profile of the registered agent 16, a housing company of the registered agents 16, a list of operative authorizations for the registered agent 16, a language of the registered agent 16 and a nationality of the registered agent 16.

The main authentication unit 11 is able to select the registered agent 16 from the database 15, who corresponds to the badge 7 read by the badge reader 9. The selected registered agent is also called authenticated agent 18. In other word, the main authentication unit 11 extracts the authenticated agent 18 from the database 15 of registered agents 16.

Advantageously, and as represented on figure 1, the database 15 of registered agents 16 belongs to the authentication unit 11.

The hardware interface 13 is embedded on the railway vehicle 1 and is able to selectively activate some of the functions and commands of the railway vehicle 1.

In the example of the invention shown on figure 1, the authentication system 5 further comprises a switch 17 and a recording unit 19, both belonging to the railway vehicle 1.

The switch 19 is preferably equipped with a Power over Ethernet (PoE) functionality and thus powers the badge reader 9. The switch 17 also transmits data between the main authentication unit 11 and the recording unit 19.

The recording unit 19 comprises a memory and is configured to collect data coming from the main authentication unit 11 through the switch 17 and store it in the memory. The memory is configured to keep the history of the railway vehicle's operation for juridical purposes.

Advantageously, the recording unit 19 and the hardware interface 13 belong to a vehicle control and management system of the vehicle 1. In the specific case where the vehicle is a train, this system is a train control and management system (TCMS) of the railway vehicle 1.

In one preferred embodiment of the invention, the authentication system 5 further comprises a commuter 22, a password authentication interface 21 and an auxiliary authentication unit 20.

The commuter 22 and the password authentication interface 21 are located in the driver's cab 2, preferably on the driver's desk. Advantageously, and as represented on figure 1, the password authentication interface 21 belongs to the hardware unit 13. The password authentication interface 21 is configured to be activated or deactivated by the commuter 22. The password authentication interface preferably comprises a display and a keyboard.

The auxiliary authentication unit 20 comprises a password generation module 23, storing a password generation algorithm and able to implement this algorithm. The auxiliary authentication unit 20 also comprises a comparison module 25, able to compare a first password received from the password authentication interface 21 with a second password generated by the password generation module 23.

Advantageously, the auxiliary authentication unit 20 belongs to the vehicle control and management system.

An authentication method used to authenticate an agent in the driver's cab of the railway vehicle 1 using the authentication system 5 is described below.

By default, all functions and commands of the railway vehicle 1 are deactivated. Authentication is needed when an agent enters the driver's cab 2 to operate the railway vehicle 1, generally when the railway vehicle 1 is at a railway station.

When the agent enters the driver's cab 2, he presents his badge 7 to the badge reader 9. In reaction, the badge reader 9 transmits a badge signal, which depends on the badge 7, to the main authentication unit 11. For example, the badge signal includes a badge key specific to the badge 7.

Using this badge signal, the main authentication unit 11 selects the authenticated agent 18 from the database 15 of registered agents 16. For example, the badge key signal is equal to the identification number of the authenticated agent 18 in the database 15 of registered agents 16.

The main authentication unit 11 then transmits to the hardware unit 13 an activation signal, which depends on the authenticated agent 18. In response to this activation signal, the hardware interface selectively activates some of the functions and commands depending on the authenticated agent 18. For example, the activation signal includes a sequence of authorization keys, each authorization key corresponding to one operating authorization from the list of operating authorizations of the authenticated agent 18 and corresponding to a specific function or command to activate. For example, if the agent is a maintenance operator, the hardware unit 13 activates the access to diagnostic screens and debug screens, while if the agent is a driver, the hardware unit 13 activates the management of train modes, the activation of traction of the train and the driving of the train.

Advantageously, once the main authentication unit 11 has selected the authenticated agent 18 from the database 15, the main authentication unit 11 transmits authenticated agent's data to the recording unit 19 through the switch 17. The authenticated agent's data transmitted to the recording unit 19 advantageously includes an identification number of the authenticated agent 18, a profile of the authenticated agent 18, a housing company of the authenticated agent 18, a list of operative authorizations for the authenticated agent 18, a language of the authenticated agent 18 and a nationality of the authenticated agent 18, extracted from the database 15 of registered agents 16. The recording unit 19 then stores this data in the memory to keep the history of the railway vehicle's operation for juridical purposes.

Advantageously, the activated functions and commands remain activated as long as the badge 7 stays close to the badge reader 9, and are deactivated when the badge 7 is taken away from the badge reader 9. This increases even further the protection against undesired utilization of the functions and commands.

Alternatively, if the agent can not use this authentication method, for example if he does not have his badge with him or if the badge reader is out of order, an alternative authentication is possible with the preferred embodiment of the authentication system 5.

An agent in this situation uses the commuter 22 to change the authentication mode. As a result, the password authentication interface 21 is activated. The control room 3 then generates and sends to the agent the first password using the same password generation algorithm as the one stored in the auxiliary authentication unit 20. The agent enters the first password on the password authentication interface 21. As a result, a password signal, which depends on the first password, is transmitted to the auxiliary authentication unit 20.

The password generation module 23 of the auxiliary authentication unit 20 generates the second password. The comparison unit 25 of the auxiliary authentication unit 20 then compares the first password and the second password. If and only if the first password and the second password are equals, the auxiliary authentication unit 20 sends an activation signal to the hardware unit 13 in order to activate some or all of the functions and commands. This auxiliary authentication method provides a way to authenticate the agent if the main authentication method is not possible, which increases the robustness of the authentication system 5.

During this alternative authentication, the database 15 of registered agents 16 remains inaccessible. Therefore, the agent has to manually enter information that should be stored for juridical purposes.

The respective features of this authentication system and method and embodiment considered can be combined.

## Claims

1. Authentication system (5) for authenticating an agent in a vehicle (1), comprising a hardware interface (13) configured to activate functions and commands to operate the vehicle (1), **characterized in that** :
- the authentication system (5) also comprises :
• badges (7), for each agent to be equipped with ;
• a badge reader (9), configured to be located in a driver's cab (2) of the vehicle (1) and to read the badges (7) ;
• a database (15) of registered agents (16), each registered agent (16) corresponding to one of the badges (7),
• a main authentication unit (11) being configured to select an authenticated agent (18) among the registered agents (16), the authenticated agent (18) corresponding to the badge (7) currently read by the badge reader (9) ; and
- the hardware interface (13) is configured to selectively activate some of the functions and commands depending on the selected authenticated agent (18) when one of the badges (7) is read by the badge reader (9).

2. Authentication system (5) according to claim 1, comprising a recording unit (19), configured to collect and store authenticated agent's data, once the main authentication unit (11) has selected the authenticated agent (18) from the database (15) of registered agents (16), wherein the authenticated agent's data is extracted from the database (15) of registered agents (16) and is communicated to the recording unit (19) by the main authentication unit (11).

3. Authentication system (5) according to claim 2, wherein the authenticated agent's data include information among at least one of the following: an identification number of the authenticated agent (18), a profile of the authenticated agent (18), a housing company of the authenticated agent (18), a list of operative authorizations for the authenticated agent (18), a language of the authenticated agent (18) and a nationality of the authenticated agent (18).

4. Authentication system (5) according to any of the claims 1-3, comprising:
- a password authentication interface (21), configured to be located in the driver's cab (2);
- a commuter (22), configured to be located in the driver's cab (2), to bypass the badge reader (9) and the main authentication unit (11) and to activate the password authentication interface (21); and
- an auxiliary authentication unit (20), configured to compare a first password from the password authentication interface (21) with a second password generated by an algorithm stored in the auxiliary authentication unit (20) and to activate some of the commands and functions if the first password and the second password are equal.

5. Authentication system (5) according to any of claims 2 or 3 and according to claim 4, wherein the hardware interface (13), the recording unit (19) and the auxiliary authentication unit (20) belong to a vehicle control and management system of the vehicle (1).

6. Authentication system (5) according to any of the claims 1-5, wherein :
- the database (15) of registered agents (16) comprises operative authorizations, each registered agent (16) being attributed with some of the operative authorizations ; and
- the hardware interface (13) is configured to activate a given list of functions or commands depending on the operative authorizations attributed to the authenticated agent (18).

7. Authentication system (5) according to any of the claims 1-6, wherein the functions and commands include at least one function or command among: a management of train modes, an activation of traction of a train, a driving of the train, an access to diagnostic screens and an access to debug screens.

8. Authentication system according to any of the claims 1-7, wherein the database (15) of registered agents (16) belongs to the main authentication unit (11).

9. Vehicle (1) comprising an authentication system (5) according to any of the claims 1-8.

10. Vehicle (1) according to claim 9, comprising the driver's cab (2) and wherein the badge reader (9) is located in the driver's cab (2).

11. Authentication method, using an authentication system (5) according to any of the claims 1-8, comprising the following steps :
- reading of one of the badges (7) by the badge reader (9);
- selection of the authenticated agent (18) among the database (15) of registered agents (16) by the main authentication unit (11) depending on the badge (7) read by the badge reader (9);
- selective activation by the hardware unit (13) of some of the functions and commands to operate the vehicle (1) depending on the authenticated agent (18).
